# EUROPÄISCHE PATENTSCHRIFT

(11) **EP 1 855 898 B1**
(45) Veröffentlichungstag und Bekanntmachung des Hinweises auf die Patenterteilung: **25.04.2012**
(21) Anmeldenummer: 06707258.7
(22) Anmeldetag: 24.02.2006
(51) Int. Cl.: B60G 17/019, B60G 17/0165, G01S 13/88

(54) **SENSOREINRICHTUNG ZUR MESSUNG DES EINFEDERWEGS UND/ODER DER EINFEDERGESCHWINDIGKEIT VON RÄDERN UND/ODER ACHSEN VON FAHRZEUGEN**
DETECTING DEVICE FOR MEASURING CLEARANCE AND/OR DEVIATION SPEED OF MOTOR VEHICLE WHEELS AND/OR AXLES
DISPOSITIF DE DETECTION SERVANT A MESURER LE DEBATTEMENT ET/OU LA VITESSE DE DEFLEXION DE ROUES ET/OU D'AXES DE VEHICULES

(30) Priorität: 24.02.2005 DE 102005008403
(43) Veröffentlichungstag der Anmeldung: 21.11.2007
(73) Patentinhaber: KNORR-BREMSE Systeme für Nutzfahrzeuge GmbH, 80809 München (DE)
(72) Erfinder: HECKER, Falk, 71706 Markgröningen (DE)
(74) Vertreter: Schönmann, Kurt
(86) Internationale Anmeldenummer: PCT/EP2006/001719
(87) Internationale Veröffentlichungsnummer: WO 2006/089775

(56) Entgegenhaltungen:
- EP-A- 0 924 115
- DE-A1- 3 315 594
- DE-A1- 3 423 602
- DE-A1- 10 025 631
- DE-A1- 19 710 311
- US-A- 4 290 044
- US-A- 4 349 735
- US-A- 5 696 515
- US-A- 6 000 703
- US-A1- 2004 168 512
- US-B1- 6 318 524
- PATENT ABSTRACTS OF JAPAN Bd. 004, Nr. 006 (M-088), 18. Januar 1980 (1980-01-18) -& JP 54 142734 A (KOMATSU LTD), 7. November 1979 (1979-11-07)

## Beschreibung

Die Erfindung betrifft eine Sensoreinrichtung zur Messung des Einfederwegs und/oder der Einfedergeschwindigkeit von Rädern und/oder Achsen von Fahrzeugen, insbesondere von Nutzfahrzeugen, gemäß dem Oberbegriff des Patentanspruchs 1.

Heutzutage benötigen elektronische Fahrzeugsysteme als Messgröße den Einfederweg einzelner Achsen oder Räder. Hierzu gehören insbesondere Systeme zur Niveauregulierung bei pneumatisch gefederten Fahrzeugen.

Aus dem Stand der Technik sind Sensoreinrichtungen bekannt, bei denen der Einfederweg mittels einer Hebelmechanik in eine Drehbewegung gewandelt und der Drehwinkel mittels Winkelsensoren, beispielsweise durch Drehpotentiometer gemessen wird. Der Nachteil dieser Systeme liegt in der oft anfälligen Hebelmechanik, welche beispielsweise durch Steinschlag beschädigt werden kann. Der Ausfall der Niveauregulierung bedeutet einen Totalausfall des Fahrzeugs und zieht insbesondere bei kommerziell eingesetzten Nutzfahrzeugen hohe Ausfallkosten nach sich.

Zur Beseitigung dieser Nachteile werden vom Stand der Technik deshalb auch gattungsgemäße, berührungslose Sensoreinrichtungen vorgeschlagen, die nach dem Ultraschallprinzip arbeiten. Hierbei hat sich als nachteilig herausgestellt, dass die Messgenauigkeit von Ultraschallsensoren stark von Umgebungsbedingungen wie der Außentemperatur, dem Umgebungsdruck sowie auch wesentlich vom Verschmutzungsgrad der Sensoroberflächen abhängt.

In DE 33 15 594 A wird ein Fahrzeug mit radarbasierten Sende-Empfangseinrichtungen im Bereich des Vorderwagens und des Hinterwagens offenbart, wobei die Fahrbahnoberfläche die Reflexionsfläche für den Radarstrahl bildet. Hierzu sind für die Sende-Empfangseinrichtungen eigene Aufnahmen im Bereich des Vorderwagens bzw. Hinterwagens vorgesehen. Außerdem sind ungenaue Messergebnisse zu erwarten, da sich die Qualität der Fahrbahnoberfläche hinsichtlich ihrer Reflexionseigenschaften bei Schnee, Nässe, Verschmutzung mit Laub etc. ständig ändert.

Gemäß DE 197 10 311 A1 wird ein Schwingungsdämpfer für Kraftfahrzeuge mit Mitteln zur Bestimmung der Relativposition eines Kolbens innerhalb eines Zylinders beschrieben, wobei die Zylinder-Kolben-Einheit als Hohlraumresonator für hochfrequente Schwingungen ausgebildet ist, und eine Hochfrequenz-Sende-Empfangsantenne in einem von einer Kolbenfläche begrenzten Zylinderhohlraum angeordnet ist. In DE 100 25 631 A1 wird eine Integration des Niveauregelsensors in eine Luftfeder vorgeschlagen. Gemäß US 5 696 515 A1 wird ein Abstandssensor beschrieben, welcher mittels Radar den Abstand einer Karosserie zur Fahrbahn misst. In US 2004/0168512 A1 wird ein Radardetektor zum Detektieren von Reifenschäden an Reifenflanken beschrieben, wobei die Radarstrahlen in horizontaler Richtung ausgesendet werden, um die Reifenflanke zu erfassen.

Die gattungsbildende DE 34 23 602 A1 offenbart einen Sender/Empfänger mit einem auf eine Reflexionsfläche an einer Achse gerichtet ausgesendeten Ultraschallsignal. Die Reflexionsfläche 21 innerhalb eines Luftfederbalgs einer Luftfederung angeordnet, so dass je Fahrzeug mindestens vier solcher Sensoreinrichtungen verbaut sind, um je Rad das gerade vorliegende Niveau in Bezug zur Karosserie messen zu können. Mit Hilfe einer elektronischen Auswerteeinrichtung können dann die Einfederwege der einzelnen Räder einer Achse und damit auch der Achse per se bestimmt werden kann. Wenn jedoch auf diese Weise lediglich an einem Rad der Einfederweg gemessen wird, wirkt sich eine einseitige Beladung des Fahrzeugs auf das Messergebnis aus, was insbesondere beim Einsatz des Sensors im Rahmen einer Niveauregulierung nachteilig ist. Um diesen Einfluss zu eliminieren, ist folglich an jedem Rad eine solche Sensor-Reflexionsflächen-Kombination mit eigener Auswerteeinrichtung vorzusehen und aus den radbezogenen Messergebnissen je Achse ein Mittelwert zu bilden, was mit einem gewissen Aufwand an Sensorik und Auswertung verbunden ist.

Der vorliegenden Erfindung liegt die Aufgabe zugrunde, eine Sensoreinrichtung der eingangs erwähnten Art derart weiter zu entwickeln, dass sie kostengünstig und auf einfache Weise möglichst genaue Messergebnisse liefert.

Diese Aufgabe wird erfindungsgemäß durch die Merkmale von Patentanspruch 1 gelöst.

### Offenbarung der Erfindung

Es wird vorgeschlagen, den Sensor der Sensoreinrichtung durch einen Radar-oder Hochfrequenzsensor zu bilden, im folgenden kurz Radarsensor genannt. Das an sich bekannte Messprinzip basiert auf der Laufzeit- bzw. Laufgeschwindigkeitsmessung eines von einem Sender des Sensors ausgesendeten elektromagnetischen Strahls, welcher an einer Referenz- oder Reflexionsfläche reflektiert und von einem Empfänger des Sensors aufgenommen wird. Die von der Referenz- oder Reflexionsfläche reflektierten Strahlen werden dabei bezüglich Laufzeit, Dopplerverschiebung und Amplitudenverhältnis in einer elektronischen Auswerteeinheit analysiert und daraus der momentane Einfederweg, die Einfeder- bzw. Ausfedergeschwindigkeit und u.U. auch die Winkellage berechnet. Entscheidend dabei ist, dass der Sensor dem Chassis oder dem Rahmen des Fahrzeugs und die Referenz- oder Reflexionsfläche an dem gegenüber dem Chassis oder dem Rahmen einfedernden Element angeordnet ist.

Erfindungsgemäß bildet ein dem Radar- und/oder Hochfrequenzsensor gegenüberliegender Teil einer Außenfläche eines Gehäuses eines an der Achse festgelegten Differenzialgetriebes die Referenz- oder Reflexionsfläche.

Solche Radarsensoren zeichnen sich durch eine relativ hohe Unempfindlichkeit gegenüber Umgebungsbedingungen wie beispielsweise Temperatur- oder Druckänderungen und Verschmutzungen aus. Außerdem kommt die Radartechnik bereits bei ACC-Systemen (Adaptive Cruise Control) in Nutzfahrzeugen zum Einsatz, durch welche der Abstand eines Fahrzeugs zu einem vorausfahrenden Fahrzeug berührungslos gemessen wird, so dass die Sensoren vergleichsweise günstig sind.

Eine Ausführungsform sieht vor, dass der Radarsensor in oder an einem Gehäuse eines rahmen- oder chassisfesten Luftfederventils einer Luftfedereinrichtung angeordnet ist, wobei ein dem Sensor gegenüberliegender Teil der Außenfläche des Gehäuses des an der Achse festgelegten Differenzialgetriebes die Referenz- oder Reflexionsfläche bildet. Dies spart einerseits Bauraum, andererseits muss keine eigene Aufnahme für den Radarsensor am Rahmen vorgesehen werden.

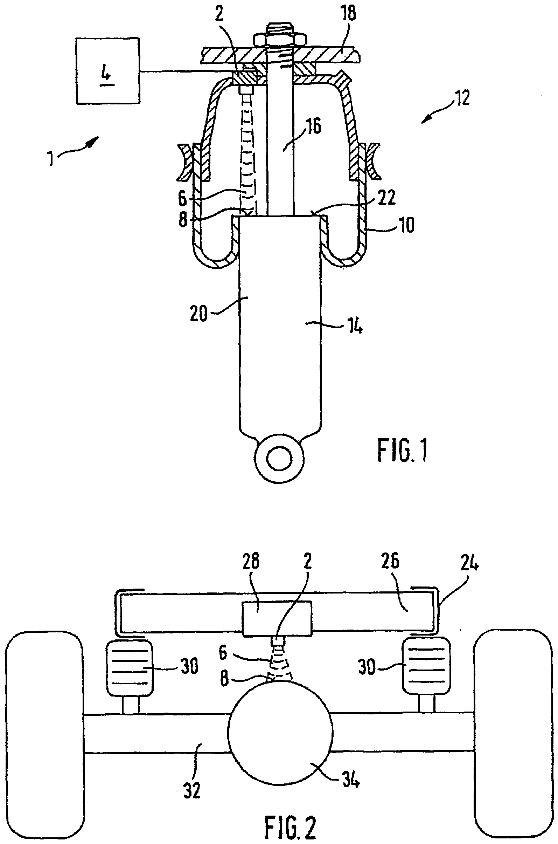

Der Aufbau der erfindungsgemäßen Sensoreinrichtung wird durch die nachfolgende Beschreibung des erfindungsgemäβen Ausführungsbeispiel nach Figur 2 deutlich.

### Zeichnungen

Nachstehend ist ein Ausführungsbeispiel der Erfindung in der Zeichnung dargestellt und in der nachfolgenden Beschreibung näher erläutert. In der Zeichnung zeigt .
- Fig.1: eine stark schematisierte Darstellung einer nicht erfindungsgemäβen Sensoreinrichtung;
- Fig.2: eine stark schematisierte Darstellung einer nicht erfindungsgemäβen Sensoreinrichtung gemäß einer Ausführungsform der Erfindung;
- Fig.3: eine stark schematisierte Darstellung einer weiteren nicht erfindungsgemäβen Sensoreinrichtung;
- Fig.4: eine stark schematisierte Darstellung einer weiteren nicht erfindungsgemäβen Sensoreinrichtung;
- Fig.5: eine stark schematisierte Darstellung einer weiteren nicht erfindungsgemäβen Sensoreinrichtung.

Die schematisierten Darstellungen der Sensoreinrichtungen, die in Figuren 1, 3, 4 und 5 gezeigt sind, bilden keinen Teil der beanspruchten Erfindung.

### Beschreibung des Ausführungsbeispiels

Die Fig.1 insgesamt mit 1 bezeichnete Sensoreinrichtung wird bevorzugt zur Messung des Einfederwegs und/oder der Einfedergeschwindigkeit von Rädern und/oder Achsen von Nutzfahrzeugen verwendet und umfasst einen an sich, beispielsweise aus dem Kraftfahrtechnischen Handbuch der Robert Bosch GmbH, 24.Auflage, S.141/142 bekannten Radar- oder Hochfrequenzsensor 2 sowie eine mikrocomputerbasierte, elektronische Auswerteeinrichtung 4 auf.

Das Messprinzip basiert auf der Laufzeit- bzw. Laufgeschwindigkeitsmessung eines von einem Sender des Radarsensors 2 ausgesendeten elektromagnetischen Radarstrahls 6, welcher an einer Referenz- oder Reflexionsfläche 8 eines ein- und ausfedernden Elements reflektiert und von einem Empfänger des Radarsensors 2 aufgenommen wird. Die von der Referenz- oder Reflexionsfläche 8 reflektierten Radarstrahlen 6 werden dabei bezüglich Laufzeit, Dopplerverschiebung und Amplitudenverhältnis in der Auswerteeinrichtung 4 analysiert und daraus der momentane Einfederweg, die Einfeder- bzw. Ausfedergeschwindigkeit und u.U. auch die Winkellage berechnet. Dabei kann der Radarsensor 2 dem Chassis oder dem Rahmen des Nutzfahrzeugs und die Referenz- oder Reflexionsfläche 8 an dem gegenüber dem Chassis oder dem Rahmen einfedernden Element angeordnet sein oder umgekehrt.

Der Radarsensor 2 hat vorzugsweise eine Arbeitsfrequenz von 76..77 GHz (Wellenlänge ca. 3,8 mm), was den für den Fahrzeugeinsatz erforderlichen kompakten Aufbau ermöglicht. Ein Gunnoszillator (Gunndiode in Hohlraumresonator) speist parallel drei nebeneinander angeordnete Patch-Antennen als Sender, die gleichzeitig auch als Empfänger der reflektierten Signale dienen. Eine vorgesetzte Kunststofflinse (Fresnel) bündelt den Sendestrahl. Durch den seitlichen Versatz der Antennen zeigt ihre Empfangscharakteristik (6-dB-Breite 4°) in unterschiedliche Richtungen. Neben der Entfernung des einfedernden Elements vom Rahmen des Nutzfahrzeugs und der Einfedergeschwindigkeit kann somit auch die Richtung ermittelt werden, unter der sie detektiert werden. Richtungskoppler trennen gesendete und empfangene Reflexionssignale. Drei nachgeschaltete Mischer transponieren die Empfangsfrequenz durch Zumischung der Sendefrequenz nahezu auf Null herunter (0...300 kHz). Die niederfrequenten Signale werden zur weiteren Auswertung digitalisiert und zur Frequenzbestimmung einer schnellen Fourier-Analyse unterzogen.

Die Frequenz des Gunnoszillators wird ständig mit der eines stabilen Referenzoszillators DRO (Dielectric Resonance Qscillator) verglichen und auf einen vorgegebenen Sollwert geregelt. Hierbei wird die Speisespannung der Gunndiode solange verändert, bis sie wieder dem Sollwert entspricht. Über diese Regelschleife wird zur Messung die Frequenz des Gunnoszillators alle 100 ms kurzzeitig sägezahnförmig um 300 MHz erhöht und erniedrigt (FMCW Frequency Modulated Continuous Wave). Das an dem einfedernden Element oder am Rahmen reflektierte Signal ist entsprechend der Laufzeit verzögert (d.h. in der ansteigenden Rampe von niedrigerer Frequenz, in der abfallenden Rampe von einer um den gleichen Betrag höheren Frequenz). Die Frequenzdifferenz Δf ist direkt ein Maß für den Abstand (z.B. 2 kHz/m). Besteht jedoch zwischen dem Rahmen und dem einfedernden Element zusätzlich eine bestimmte Relativ- oder Einfedergeschwindigkeit, so wird die Empfangsfrequenz fₑ wegen des Dopplereffekts sowohl in der aufsteigenden als auch in der abfallenden Rampe um einen bestimmten, proportionalen Betrag Δf_{d} erhöht (z. B. 512 Hz pro m/s), d.h. es ergeben sich zwei unterschiedliche Differenzfrequenzen Δf₁ und Δf₂ Ihre Addition ergibt den Abstand, ihre Differenz die Einfedergeschwindigkeit des einfedernden Elements relativ zum Rahmen.

Zumindest ein Teil des Radarsensors 2 ist innerhalb eines ein Gasvolumen aufnehmenden Luftfederbalgs 10 eines Luftfederelements 12 angeordnet, welches mit einem Schwingungsdämpfer 14 kombiniert ist, der mit einer Kolbenstange 16 in den Luftfederbalg 10 hineinragt, wobei die Kolbenstange 16 einendseitig an einer Stoßdämpferaufnahme am Rahmen 18 des Nutzfahrzeugs gehalten ist. Anderendseitig ragt die Kolbenstange 16 in den außerhalb des Luftfederbalgs 10 angeordneten Dämpferkörper 20 hinein, indem sie durch eine Durchgangsöffnung der Kopfplatte 22 des Dämpferkörpers 20 hindurchgeführt einen in Fig.1 nicht sichtbaren, im Dämpferkörper 20 geführten Kolben trägt, der mit dem Dämpfungsmedium zusammenwirkt. Vorzugsweise wird die Referenz- oder Reflexionsfläche 8 für den vorzugsweise parallel zur Kolbenstange verlaufenden Radarstrahl 6 durch die Kopfplatte 22 des Dämpferkörpers 20 gebildet. Alternativ kann auch jegliche andere einfedernde, ins Innere des Luftfederbalgs 10 weisende Fläche, beispielsweise eine Fläche des Kolbens als Referenz- oder Reflexionsfläche 8 für den Radarstrahl 6 dienen. Bei ohne integrierten Schwingungsdämpfer 14 ausgeführten Luftfederbälgen 10 kann die Referenz- oder Reflexionsfläche 8 auch an einem dann vorhandenen Luftfederkolben ausgebildet sein.

Gemäß einer in Fig.2 gezeigten Ausführungsform der Erfindung ist der Radarsensor 2 in das Gehäuse eines zentral an einer zwei Rahmenlängsträger 24 miteinander quer verbindenden Quertraverse 26 angeordneten Luftfederventils 28 einer Luftfedereinrichtung des Nutzfahrzeugs integriert, das einem Gehäuse eines von einer angetriebenen, durch Luftfederbälge 30 gefederten Starrachse 32 getragenen Differenzialgetriebes 34 gegenüberliegend angeordnet ist. In diesem Fall bildet beispielsweise ein dem Radarsensor 2 gegenüberliegender Teil der Außenfläche des Gehäuses des Differenzialgetriebes 34 die Referenz- oder Reflexionsfläche 8 für den Radarstrahl 6, welcher senkrecht zur Starrachse 32 verläuft.

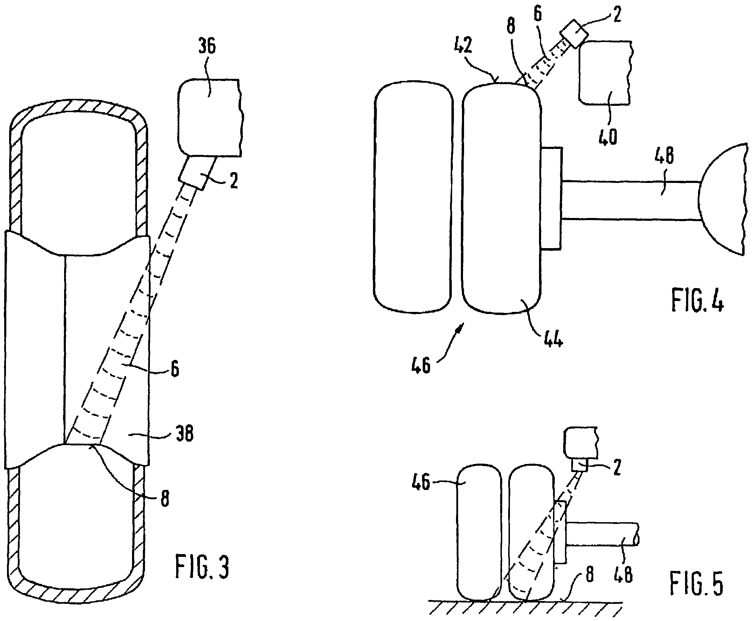

Gemäß Fig.3 ist der Radarsensor 2 dem Rahmen, genauer dem Längsträger 36 des Nutzfahrzeugs und die Referenz- oder Reflexionsfläche 8 vorzugsweise einer radial inneren Felgenfläche einer Radfelge 38 zugeordnet, mit Schrägausrichtung des Radarstrahls 6.

Fig.4 zeigt ein Beispiel, bei welchem der Radarsensor 2 wiederum am Rahmen, genauer am Längsträger 40 des Nutzfahrzeugs befestigt und die Referenz- oder Reflexionsfläche 8 durch die Lauffläche 42 eines inneren Reifens 44 eines Zwillingsreifens 46 auf einer Seite einer angetriebenen Starrachse 48 gebildet wird. Analog kann auch der Einfederweg- und die Einfedergeschwindigkeit des Zwillingsreifens auf der anderen Achsseite mit einem eigenen Radarsensor 2 gemessen werden.

Es ist jegliche Anwendung denkbar, bei welcher der Radarsensor 2 dem Rahmen oder dem Chassis des Fahrzeugs und die Referenz- oder Reflexionsfläche 8 einem einfedernden Element des Fahrzeugs zugeordnet ist oder umgekehrt.

So könnte die Sensoreinrichtung gemäß Fig.1 derart abgewandelt sein, dass zumindest ein Teil des Radarsensors 2 innerhalb des Schwingungsdämpfers 14 des Fahrzeugs angeordnet ist und die Referenz- oder Reflexionsfläche 8 durch eine Kolbenfläche des Dämpferkolbens gebildet wird. Ebenso könnte die Ausführungsform gemäß Fig.2 so verändert werden, dass der Radarsensor 2 dem Rahmen oder dem Chassis des Fahrzeugs und die Referenz- oder Reflexionsfläche 8 einem Achslenker der Starrachse 32 zugeordnet ist.

Die verschiedene Veränderungen können gemacht werden, ohne der Inhalt der Ansprüche zu verlassen.

Die Reichweite der Erfindung wird durch die nachvolgenden Ansprüche definiert.

### Bezugszeichenliste

- 1: Sensoreinrichtung
- 2: Radarsensor
- 4: Auswerteeinrichtung
- 6: Radarstrahl
- 8: Reflexionsfläche
- 10: Luftfederbalg
- 12: Luftfederelement
- 14: Schwingungsdämpfer
- 16: Kolbenstange
- 18: Rahmen
- 20: Dämpferkörper
- 22: Kopfplatte
- 24: Rahmenlängsträger
- 26: Quertraverse
- 28: Luftfederventil
- 30: Luftfederbälge
- 32: Starrachse
- 34: Differenzialgetriebe
- 36: Längsträger
- 38: Radfelge
- 40: Längsträger
- 42: Lauffläche
- 44: Reifen
- 46: Zwillingsreifen
- 48: Starrachse

## Patentansprüche

1. Sensoreinrichtung zur Messung des Einfederwegs und/oder der Einfedergeschwindigkeit von Achsen von Fahrzeugen, insbesondere von Nutzfahrzeugen, beinhaltend wenigstens einen berührungslos messenden Sensor, welcher durch einen einen ausgesendeten und nach Reflektion an einer Referenz- oder Reflexionsfläche (8) empfangenen Strahl (6) erzeugenden Radar- und/oder Hochfrequenzsensor (2) gebildet wird, wobei der Radar- und/oder Hochfrequenzsensor (2) dem Rahmen (26) oder dem Chassis des Fahrzeugs und die Referenz- oder Reflexionsfläche (8) einer Achse (32, 34) des Fahrzeugs zugeordnet ist, **dadurch gekennzeichnet, dass** ein dem Radar- und/oder Hochfrequenzsensor (2) gegenüberliegender Teil einer Außenfläche eines Gehäuses eines an der Achse (32) festgelegten Differenzialgetriebes (34) die Referenz- oder Reflexionsfläche (8) bildet.

2. Sensoreinrichtung nach Anspruch 1, **dadurch gekennzeichnet, dass** der Radar- und/oder Hochfrequenzsensor (2) in oder an einem Gehäuse eines rahmen- oder chassisfesten Luftfederventils (28) der Luftfedereinrichtung angeordnet ist.

## Claims

1. Sensor system for measuring the suspension travel and/or the suspension travel rate of axles of vehicles, in particular of commercial vehicles, comprising at least one sensor measuring without contact, which is constituted by a radar and/or high-frequency sensor (2) generating an emitted beam (6) that is received after reflection on a reference or reflection surface (8), wherein said radar and/or high-frequency sensor (2) is associated with the frame (26) or the chassis of the vehicle and the reference or reflection surface (8) of an axle (32, 34) of the vehicle, **characterised in that** a part of an outside surface of a housing of a differential gearbox (34), which is opposite to said radar and/or high-frequency sensor (2), constitutes said reference or reflection surface (8).

2. Sensor system according to Claim 1, **characterised in that** said radar and/or high-frequency sensor (2) is disposed in or on a housing or an air suspension valve (28) fixedly connected to the frame or chassis of the air suspension system.

## Revendications

1. Système de détection à mesurer la distance de débattement et/ou la vitesse de débattement des essieux de véhicules, en particulier des véhicules utilitaires, comprenant au moins un détecteur de mesure sans contact, qui est constitué par un détecteur radar et/ou haute fréquence (2), qui engendre un rayon émis (6) reçu après sa réflexion sur une surface de référence ou de réflexion (8), dans lequel ledit détecteur radar et/ou haute fréquence (2) est affecté au cadre (26) ou au châssis du véhicule et ladite surface de référence ou de réflexion (8) d'un essieu (32, 34) du véhicule, **caractérisé en ce qu'**une partie d'une surface extérieure d'un carter d'une transmission différentielle (34), qui est oppose audit détecteur radar et/ou haute fréquence (2), constitue ladite surface de référence ou de réflexion (8).

2. Système de détection selon la revendication 1, **caractérisé en ce que** ledit détecteur radar et/ou haute fréquence (2) est dispose dans ou sur un carter ou une soupape de suspension pneumatique (28), qui est fixée audit cadre ou châssis du système de suspension pneumatique.
